# EUROPEAN PATENT SPECIFICATION

(11) **EP 1 526 067 B1**
(45) Date of publication and mention of the grant of the patent: **09.08.2006**
(21) Application number: 04023864.4
(22) Date of filing: 07.10.2004
(51) Int. Cl.: B62K 25/04

(54) **Front suspension for vehicles with front steerable wheel**
Vorderradaufhängung für Fahrzeuge mit lenkbarem Vorderrad
Suspension avant pour véhicules à roue avant dirigeable

(30) Priority: 20.10.2003 PL 36295103
(43) Date of publication of application: 27.04.2005
(73) Proprietor: Delphi Technologies, Inc., Troy, MI 48007 (US)
(72) Inventor: Mydlarz, Jerzy, 34 100 Wadowice (PL)
(74) Representative: Lukaszyk, Szymon

(56) References cited:
- EP-A- 0 994 014
- DE-A- 19 546 770
- DE-A- 19 816 636
- US-A- 4 669 747
- US-A- 5 772 227
- US-B2- 6 631 915

## Description

The present invention relates to front suspension for vehicles with front steerable wheel, such as bicycles, motor-bicycles, motorcycles or tricycles, comprising elastic and damping elements.

Usually the goal of the suspension designing is to minimise the total mass of the unsprung suspension elements placed on the wheel side of the vehicle, including the wheel itself. It is related, among all, with the need to decrease the front fork tensions which are transmitted onto the steering column, while riding the vehicle on rough road. However, in the typical constructions of telescopic forks the total mass of unsprung elements is increased by the weight of the spring and the damper.

The U.S. Pat. No 5,749,590 discloses a front suspension, where elastic and damping elements are placed in the steering column and controlled by a multiple link pivoting mounting mechanism. Thanks to that, the mass of the fork was reduced and an additional transmission increasing the fork stroke in relation to the shock absorber stroke was introduced.

Another solution disclosed in FR 2690408 patent specification is the motorcycle front suspension mechanism. The mechanism consists of a lever in the form of a circular arc supported on the front telescopic fork covers which permits rotation thereof. The lever is divided into two segments on both sides of the vehicle and is fixed to the vehicle chassis by roller bearings. The ends of the arms are held by counterweights on the extendible shock absorbers, and the shock absorbers are attached under the rear fork arms, midway between the wheel axle and the fork pivoting axle. During braking the lever relieves the front suspension and transmits the force onto the rear shock absorbers, so the vehicle is kept in almost normal position and two wheels thereof stay in touch with the ground.

The aim of the present invention is to provide a front suspension for a vehicle with front steerable wheel, having possibly the smallest mass of the unsprung suspension elements. In particular, the aim of the present invention is to provide the front suspension for a vehicle with front steerable wheel, comprising elastic and damping elements, where these elements are placed on the springing side.

Another aim of the invention is to provide a front suspension for a vehicle with front steerable wheel, which would allow stabilising the vehicle position by means of appropriate transmission of the inertial forces which occur during braking or accelerating of the vehicle.

According to the present invention there is provided a front suspension which comprises at least one pull rod connected at one end to the upper part of the front wheel fork, able to shift in relation to the fork column of the handle bar, and at the other end to the elastic element and/or the damping element, supported by at least one end on the vehicle frame, wherein the pull rod goes through the handle bar steering axis.

Since the tensions transmitted during the drive onto the fork column of the handle bar by the unsprung suspension elements situated on the wheel side of the vehicle depend on mass thereof, relocating the shock absorber to the vehicle frame allows to decrease the required strength parameters of these elements. Leading the pull rod in the handle bar steering axis does not result in lengthening thereof, while the front wheel is turned.

Preferably, the pull rod is led on at least one leading element supported on the vehicle frame.

The leading element is preferably formed as a turning roll.

Alternatively, the leading element is preferably formed as a rocker connecting two parts of the pull rod which enables to apply several stiff pull rods instead of one flexible pull rod.

Obviously, it is also possible to use other leading elements, for example in the form of a sliding cam.

Preferably, the fork is able to shift in at least one sleeve fixed to the fork column of the handle bar.

Then, it is preferable that the sleeve has rolling elements, where the fork is led.

The sleeve can be alternatively equipped with appropriate slide linings.

Moreover, it is preferable that the shift axis of the fork and the steering axis of the handle bar are substantially parallel to each other.

In such a case, it is preferable that fork column of the handle bar is seated rotationally on the sleeve in which the fork is led and connected to the fork by a sliding splined coupling.

Since the ground pressure affecting the front wheel is transmitted onto the pull rod, it is preferable to connect its other end to the fork of the vehicle rear suspension.

Thanks to the above, it is possible to couple the front and the rear suspension shifts in order to reduce vehicle diving effect during braking or lifting the front wheel during rapid acceleration.

In such case, said elastic and/or damping elements may preferably constitute the shock absorber of the vehicle rear suspension.

Preferably, the pull rod is made of flexible material, thanks to which the pull rod takes part in amortisation and dissipation of vibration energy.

The invention is described below in exemplary embodiments and with reference to the attached drawings on which:
fig. 1 is a side view of the front suspension according to the present invention, showing the principle of its operation,
fig. 2 shows schematically the principle of operation of the vehicle position stabilisation system during braking or rapid acceleration,
fig. 3 is a front view of an embodiment of the front suspension for a bicycle, and fig. 4 is a side view thereof,
fig. 5 is a side view of another example of a front suspension according to the present invention in partial cross-section.

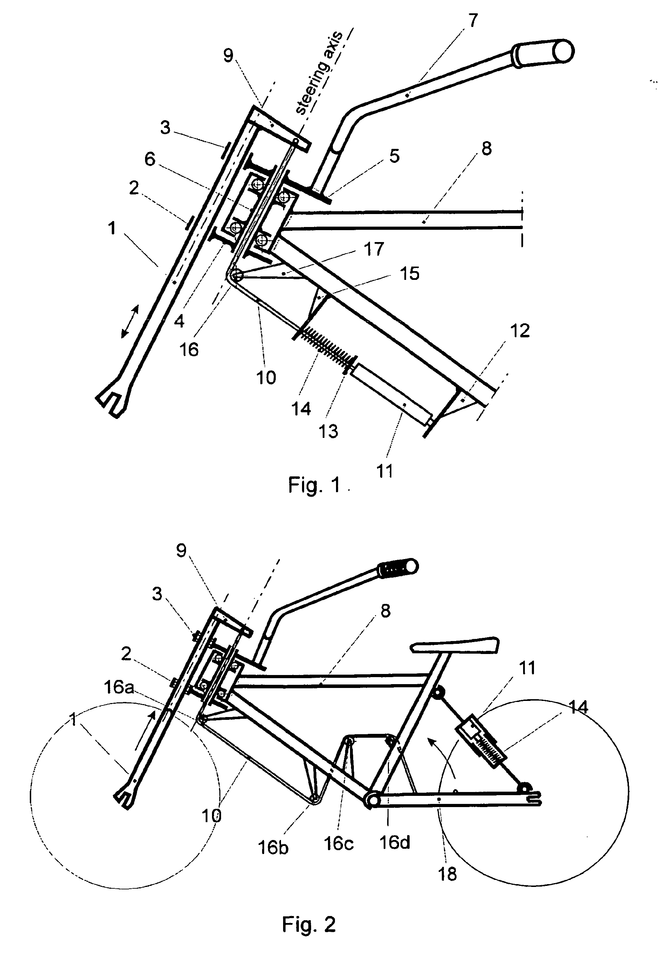

As shown in fig. 1 a fork 1 consists of two tubes holding front steering wheel of a vehicle not shown in the drawing. Each of the fork 1 tubes is stabilised and led sliding in a bottom sleeve 2 and an upper sleeve 3. The sleeves contain appropriate means reducing friction between the fork 1 tubes, such as slide linings or rolling elements. The bottom 2 and the upper 3 sleeves are mounted to bottom 4 and upper 5 supports connected to fork column 6 of handle bar 7 of the vehicle. The fork column 6 is connected in known manner to vehicle frame 8 by means of bearings.

Above the upper sleeve 3 the fork 1 tubes are connected to a support 9 to which a pull rod 10, e.g. in a form of a steel line, is mounted. The other end of the pull rod 10 is connected to piston rod of damping element 11, fixed to support 12 mounted on the frame 8 of the vehicle. Moreover, resistance plate 13 supporting elastic element in form of the spring 14 is mounted to the pull rod 10. The other end of the spring 14 bears on support 15. It is obvious that other configurations and mounting arrangements of elastic and damping elements are equally possible, e.g. only one, one side supported elastic element or damping element and pull rod made of elastic material.

The pull rod 10 goes along the steering axis of the handle bar 7, through the opening in the upper support 5, the fork column 6, the opening in the bottom support 4, and then surrounds the turning roll 16, connected by bearing to the support 17 fixed to the vehicle frame 8.

During riding the vehicle on a rough road the front wheel vibrations are transmitted onto the fork 1, as indicated by double arrow. The forces acting along the fork axis are subsequently transmitted through the support 9 and the pull rod 10 onto the elastic element 14 and the damping element 11.

Fig. 2 shows schematically the vehicle position stabilizing system during impact of the inertial forces which occur during braking or accelerating the vehicle. In particular, the aim of this system is to prevent vehicle diving effect during the front wheel braking.

Similarly as in fig. 1 the end of the pull rod 10 is fixed to the support 9 and then goes through turning rolls 16a, 16b, 16c and 16d, through appropriate openings in the vehicle frame 8 and the other end thereof is fixed to rocker 18 of vehicle rear suspension. The elastic 14 and damping 11 elements are mounted between the rocker 18 and the frame 8. At the same time these elements constitute the vehicle rear suspension absorber which enables additional reduction of the vehicle mass.

Front wheel vibrations are transmitted onto the fork 1 and then through the support 9 and the pull rod 10 to the elastic 14 and damping 11 elements of the rear shock absorber. Operation of such a system is similar to that of the system shown in fig. 1, however during braking and especially during front wheel braking, inertial force of the vehicle together with the rider shall act so as to shift up the fork 1 in relation to the sleeves 2 and 3 (the so called "vehicle diving"). This force however shall be transmitted by the pull rod 10 to the rocker 18, leading to the rear shock absorber compression and decreasing the rear wheel pressure on the ground, as illustrated with arrows on the drawings. As a result, the rear wheel shall be lifted up and the vehicle shall be lowered keeping substantially parallel position in relation to the ground. Obviously the above effect shall occur only during braking with small inertial force, when the force of reaction of the rear wheel on the ground still occurs. Yet it is important that this reaction depends on the force exerted by the pull rod 10 on the rocker 18, which counteracts the vehicle inertial force directed to the front.

The vehicle shall also keep its substantially parallel position with respect to the ground during accelerating. In this case inertial force shall decrease the longitudinal force, stretching the pull rod 10 and consequently lengthening the rear shock absorber. Similarly as in the previous case this phenomenon shall only occur during accelerating with small inertial force, when this force directed to the rear and causing the shortening of the rear shock absorber is still smaller than the reaction force exerted by the elastic element 14.

Other embodiments of the front suspension are presented below. Reference numerals of the same functional elements correspond to those in fig. 1.

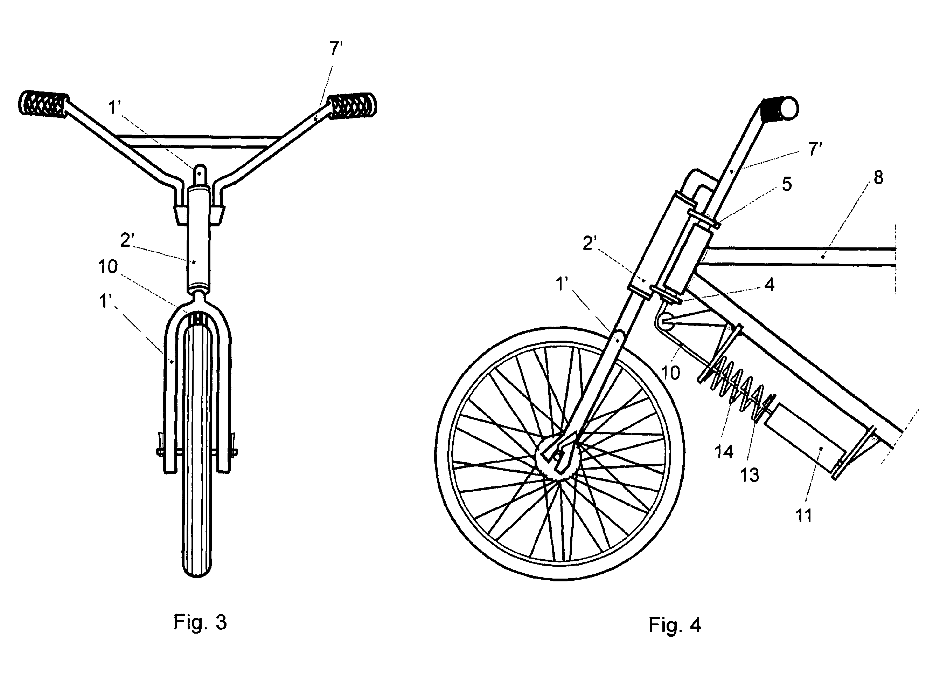

Fig. 3 and fig. 4 show the front of the bicycle, with the suspension according to the present invention. In this case tubes of the fork 1' are connected with each other directly over the front wheel. The suspension comprises only one sleeve 2', instead of upper and bottom sleeves. The shaft of the fork 1' goes through the sleeve 2' and at the top it is bent back between two arms of the handle bar 7'. In order to avoid twists of the fork 1' shaft in the sleeve 2', the sleeve 2' is equipped with appropriate slide linings decreasing friction of the fork 1' shaft and also having appropriate sliding splined coupling with the adequate projections of the fork 1' shaft.

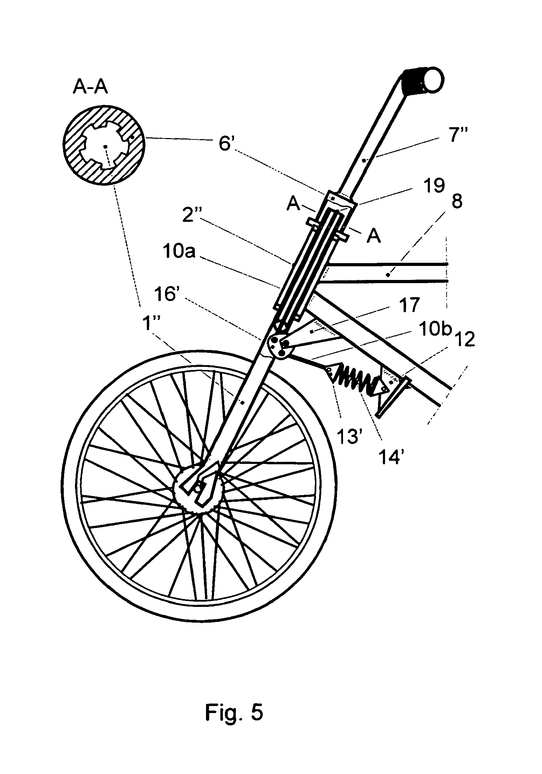

In the embodiment shown in fig. 5, instead of a turning roll, a rocker 16' seated rotationally on the support 17 which is mounted to the vehicle frame 8 is used. Moreover, instead of a single pull rod two pull rods 10a and 10b were used. By using the rocker 16' it is possible to use two stiff pull rods 10a and 10b instead of one flexible. Similarly as in the previous embodiment a single fork 1" was used, the tubes of which converge right above the vehicle wheel. However, in this embodiment the steering axis of the handle bar 7", that is the axis of the fork column 6' of the handle bar 7", is aligned with the shift axis of the fork 1", that is axis of the sleeve 2", in which the fork 1" is lead, which sleeve is the component of the bicycle frame 8.

As shown in partial cross-section in fig. 5, one end of the pull rod 10a is fixed from inside to the upper stopper 19 of the fork 1" and then goes inside the fork 1" shaft, along the handle bar 7" steering axis and goes outside below the point in which the fork 1" tubes are connected with each other and with the fork shaft. The pull rod 10a is then mounted rotationally to the rocker 16'. The pull rod 10b is also mounted rotationally to the rocker 16' and on the other side it is connected with the catch 13' of the spring 14'. The spring 14', being an elastic element is rotationally connected at the other end to support 12 fixed to the vehicle frame.

As shown in magnification of section A-A of fig. 5, the fork column 6' of the handle bar is rotationally seated on the sleeve 2" in which the fork 1" is led. The fork column 6' has a spline opening in which the upper part of the fork 1" shaft is seated, said opening having appropriate cut-outs creating the splined sliding coupling. Such a coupling enables movement of the fork along the handle bar steering axis and simultaneously transfers the circumferential forces between the handle bar 7" and the fork 1".

Although the suspension embodiments presented above generally consider bicycles, it should be obvious to a person skilled in the art that they may be used in motor-bicycles, motorcycles, tricycles and other vehicles equipped with front steerable wheel, as well. Embodiments presented above should not be considered as exhaustive or limiting the present invention, the scope of which is intended to be defined by appended claims.

## Claims

1. Front suspension for vehicles with front steerable wheel, comprising elastic and/or damping elements, **characterised in that** it comprises at least one pull rod (10) connected at one end to the upper part of the front wheel fork (1), able to shift in relation to the fork column (6) of the handle bar (7), and at the other end to the elastic element (14) and/or the damping element (11), supported by at least one end on the vehicle frame (8), wherein the pull rod (10) goes through the handle bar (7) steering axis.

2. Front suspension as claimed in claim 1, **characterised in that** the pull rod (10) is led on at least one leading element supported on the vehicle frame.

3. Front suspension as claimed in claim 2, **characterised in that** the leading element is preferably formed as a turning roll (16).

4. Front suspension as claimed in claim 2, **characterised in that** the leading element is preferably formed as a rocker (16') connecting two parts of the pull rod (10a, 10b).

5. Front suspension as claimed in claim 1 or 2, **characterised in that** the fork (1) is able to shift in at least one sleeve (2, 3, 2', 2") fixed to the fork column (6) of the handle bar (7).

6. Front suspension as claimed in claim 5, **characterised in that** the sleeve (2, 3, 2', 2") has rolling elements.

7. Front suspension as claimed in claim 5, **characterised in that** the sleeve (2, 3, 2', 2") has slide linings.

8. Front suspension as claimed in claim 1 or 2, **characterised in that** the shift axis of the fork (1) and the steering axis of the handle bar (7) are substantially parallel to each other.

9. Front suspension as claimed in claim 8, **characterised in that** the fork column (6') of the handle bar is seated rotationally on the sleeve (2"), in which the fork (1") is led and connected to the fork (1") by a sliding splined coupling.

10. Front suspension as claimed in claim 1 or 2, **characterised in that** the pull rod (10) is connected on the other end to the fork (18) of the vehicle rear suspension.

11. Front suspension as claimed in claim 10, **characterised in that** the elastic element (14) and/or the damping element (11) constitute the shock absorber of the vehicle rear suspension

12. Front suspension as claimed in claim 1 or 2, **characterised in that** the pull rod (10) is made of flexible material.

## Patentansprüche

1. Vorderradaufhängung für Fahrzeuge mit lenkbarem Vorderrad, welche elastische und/oder stossdämpfende Elemente umfasst, **dadurch gekennzeichnet, dass** sie zumindest eine Zugstange (10) umfasst, die an einem Ende mit dem oberen Teil der Vorderradgabel (1) verbunden ist, die in Bezug auf die Gabelsäule (6) der Lenkstange (7) verschiebbar ist, und an dem anderen Ende mit dem elastischen Element (14) und/oder dem stossdämpfenden Element (11) verbunden ist, das durch zumindest ein Ende auf dem Fahrzeugrahmen (8) abgestützt ist, wobei die Zugstange (10) durch die Lenkachse der Lenkstange (7) hindurch verläuft.

2. Vorderradaufhängung nach Anspruch 1, **dadurch gekennzeichnet, dass** die Zugstange (10) auf zumindest einem Führungselement geführt ist; das auf dem Fahrzeugrahmen abgestützt ist.

3. Vorderradaufhängung nach Anspruch 2, **dadurch gekennzeichnet, dass** das Führungselement vorzugsweise als Drehrolle (16) ausgebildet ist.

4. Vorderradaufhängung nach Anspruch 2, **dadurch gekennzeichnet, dass** das Führungselement vorzugsweise als Kipphebel (16') ausgebildet ist, welcher zwei Teile der Zugstange (10a, 10b) verbindet.

5. Vorderradaufhängung nach Anspruch 1 oder 2, **dadurch gekennzeichnet, dass** die Gabel (1) in der Lage ist, sich in zumindest einer Muffe (2, 3, 2', 2") zu verschieben, die an der Gabelsäule (6) der Lenkstange (7) befestigt ist.

6. Vorderradaufhängung nach Anspruch 5, **dadurch gekennzeichnet, dass** die Muffe (2, 3, 2', 2") Rollelemente aufweist.

7. Vorderradaufhängung nach Anspruch 5, **dadurch gekennzeichnet, dass** die Muffe (2, 3, 2', 2") Gleitbeläge aufweist.

8. Vorderradaufhängung nach Anspruch 1 oder 2, **dadurch gekennzeichnet, dass** die Verschiebeachse der Gabel (1) und die Lenkachse der Lenkstange (7) im wesentlichen parallel zueinander verlaufen.

9. Vorderradaufhängung nach Anspruch 8, **dadurch gekennzeichnet, dass** die Gabelsäule (6') der Lenkstange drehbar auf der Muffe (2") aufsitzt, in welcher die Gabel (1") geführt wird, und durch eine gleitende Keilprofilkupplung mit der Gabel (1") verbunden ist.

10. Vorderradaufhängung nach Anspruch 1 oder 2, **dadurch gekennzeichnet, dass** die Zugstange (10) an dem anderen Ende mit der Gabel (18) der Fahrzeug-Hinterradaufhängung verbunden ist.

11. Vorderradaufhängung nach Anspruch 10, **dadurch gekennzeichnet, dass** das elastische Element (14) und/oder das stossdämpfende Element (11) den Stossdämpfer der Fahrzeug-Hinterradaufhängung darstellen.

12. Vorderradaufhängung nach Anspruch 1 oder 2, **dadurch gekennzeichnet, dass** die Zugstange (10) aus flexiblem Material gefertigt ist.

## Revendications

1. Suspension avant pour véhicules dotés d'une roue avant dirigeable, comprenant un élément élastique et/ou un élément d'amortissement, **caractérisée en ce qu'**elle comprend au moins une tige de traction (10) raccordée, au niveau d'une extrémité, à la partie supérieure de la fourche de la roue avant (1), pouvant se déplacer par rapport à la colonne (6) de fourche du guidon (7), et au niveau de l'autre extrémité, à l'élément élastique (14) et/ou l'élément d'amortissement (11), supporté par au moins une extrémité sur le châssis (8) de véhicule, dans laquelle la tige de traction (10) s'étend par l'axe de direction du guidon (7).

2. Suspension avant selon la revendication 1, **caractérisée en ce que** la tige de traction (10) est amenée sur au moins un élément avant supporté sur le châssis du véhicule.

3. Suspension avant selon la revendication 2, **caractérisée en ce que** l'élément avant est de préférence formé comme un rouleau rotatif (16).

4. Suspension avant selon la revendication 2, **caractérisée en ce que** l'élément avant est de préférence formé comme un culbuteur (16') raccordant deux parties de la tige de traction (10a, 10b).

5. Suspension avant selon la revendication 1 ou 2, **caractérisée en ce que** la fourche (1) peut se déplacer dans au moins un manchon (2, 3, 2', 2") fixé sur la colonne (6) de fourche du guidon (7).

6. Suspension avant selon la revendication 5, **caractérisée en ce que** le manchon (2, 3, 2', 2") comprend des éléments rotatifs.

7. Suspension avant selon la revendication 5, **caractérisée en ce que** le manchon (2, 3, 2', 2") a des revêtements coulissants.

8. Suspension avant selon la revendication 1 ou 2, **caractérisée en ce que** l'axe de déplacement de la fourche (1) et l'axe de direction du guidon (7) sont sensiblement parallèles entre eux.

9. Suspension avant selon la revendication 8, **caractérisée en ce que** la colonne (6') de fourche du guidon est installée en rotation sur le manchon (2"), dans lequel la fourche (1") est amenée, et raccordée à la fourche (1") par le couplage cannelé coulissant.

10. Suspension avant selon la revendication 1 ou 2, **caractérisée en ce que** la tige de traction (10) est raccordée sur l'autre extrémité à la fourche (18) de la suspension arrière de véhicule.

11. Suspension avant selon la revendication 10, **caractérisée en ce que** l'élément élastique (14) et/ou l'élément d'amortissement (11) constitue l'amortisseur de la suspension arrière du véhicule.

12. Suspension avant selon la revendication 1 ou 2, **caractérisée en ce que** la tige de traction (10) est réalisée avec un matériau flexible.
